# EUROPÄISCHE PATENTANMELDUNG

(11) **EP 0 941 008 A2**
(43) Veröffentlichungstag der Anmeldung: **08.09.1999**
(21) Anmeldenummer: 99100255.1
(22) Anmeldetag: 08.01.1999
(51) Int. Cl.: H04Q 11/04

(54) **Gezielte Anrufselektierung**

(30) Priorität: 02.03.1998 DE 19809835
(71) Anmelder: Deutsche Telekom AG, 53113 Bonn (DE)
(72) Erfinder: Schellhaas, Werner, 64372 Ober-Ramstadt (DE)

(57) **Zusammenfassung**

Die Erfindung betrifft ein Verfahren zur Auswahl eines Endgerätes an analogen Teilnehmeranschlüssen in dem durch ein Endgerät eines rufenden Teilnehmers (3,4) an einem analogen oder digitalen Teilnehmeranschluß Geräteauswahlinformationen zusätzlich zur Rufnummer des gerufenen Teilnehmers (5,6) ausgesendet und diese Geräteauswahlinformation zum Teilnehmeranschluß des gerufenen Teilnehmers (5,6) weitergeleitet wird. Die Endgeräte (61,62, 63, 64) beim gerufenen Teilnehmer (5,6) werten diese Geräteauswahlinformation aus und nur das Endgerät wird aktiviert, dessen in einem Speicher abgelegte eigene Geräteauswahlinformation mit der empfangenen Geräteauswahlinformation übereinstimmt.

## Beschreibung

Die Erfindung betrifft ein Verfahren zur Auswahl eines Endgerätes an analogen Teilnehmeranschlüssen gemäß dem Oberbegriff des Patentanspruchs 1.

Im digitalen Telekommunikationsnetz (z.B. ISDN) ist es möglich, durch Anwahl von bis zu zehn sogenannten 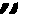 Mehrfachrufnummern (sogenannten MSN)" bestimmte Endgeräte am Zielanschluß zu rufen. Diese MSN werden dem Kunden durch den Netzbetreiber fest zugeteilt (beispielsweise 3000, 3001, 3002). In der Regel bietet der normale ISDN-Anschluß drei MSN pro Anschluß. Nur das oder die Endgeräte, die auf diese im D-Kanal des ISDN mitgelieferte MSN eingestellt sind, werden bei einer ankommenden Verbindung aktiviert, d.h. sie klingeln oder gehen automatisch in den Kommunikationszustand über (z.B. Faxgeräte, Anrufbeantworter). Diese MSN können in einer Telekommunikationsanlage (im Folgenden TK-Anlage genannt), die im Mehrgeräteanschluß betrieben wird, auch dazu benutzt werden, bestimmte Nebenstellen, denen diese MSN zugeordnet sind, zu rufen. Dabei können auch mehrere Endgeräte dieselbe MSN besitzen.

Alternativ kann ein Kunde, der einen sogenannten Anlagenanschluß besitzt, an dem eine TK-Anlage betrieben wird, durch Anwahl der Rufnummer des Anlagenanschlusses (beispielsweise 58 10) und einer entsprechenden Durchwahlkennziffer (Nebenstellenrufnummer, beispielsweise 11, 12, 13, 17) eine bestimmte Nebenstelle in der TK-Anlage direkt anwählen. Die Durchwahlkennziffer kann der Kunde selbst bestimmen. Mit Rufnummer und Durchwahlkennziffer zusammen (Durchwahl genannt), wird hier die Nebenstelle direkt angewählt. Auch hier können mehrere Endgeräte dieselbe Durchwahl besitzen.

Im ISDN ist es allerdings auch möglich, durch die Unterscheidung nach Diensten der Endgeräte (beispielsweise FAX, Telefonie, Bildtelefonie, PC-Karte usw.) auch Endgeräte , die die gleiche MSN oder Durchwahl besitzen, gezielt anzuwählen, sofern sie sich durch ihren Dienst unterscheiden.

In der Deutschen Patentanmeldung Nr. 19729126.0 wird ein Verfahren vorgeschlagen, mit dem oben genannte Dienste auch an analogen Teilnehmeranschlüsse signalisiert werden können. Diese sogenannte Dienstekennung wird vor oder während des Verbindungsaufbaus vom rufenden Teilnehmer an das Telefonnetz gesendet und über dieses zum gerufenen Teilnehmeranschluß übermittelt. Vom rufenden Teilnehmer zum Telefonnetz geschieht dies mit Hilfe von MFV-codierten Zeichen und vom Telefonnetz zum gerufenen Teilnehmer mit Hilfe von FSK-codierten Signalen.

Nachteilig ist, daß es im analogen Bereich zur Zeit nicht möglich ist, ein bestimmtes im Zielanschluß angeschaltetes Endgerät unabhängig von dessen Dienst vor Verbindungsannahme anzuwählen bzw. zu selektieren. Geräte, die den gleichen Dienst zur Verfügung stellen, werden also alle aktiviert. Werden beispielsweise an einem analogen Anschluß mehrere Telefone, die in verschiedenen Räumen stehen, betrieben, so werden diese bei einem Ruf alle klingeln.

In Zukunft ist zwar auch für analoge Wählanschlüsse geplant, mehrere Zielrufnummern (ähnlich MSN bei ISDN, deshalb im Folgenden analoge MSN genannt) einzuführen. Die Selektierung soll allerdings hierbei mittels unterschiedlicher Rufsequenzen auf der Anschlußleitung zum gerufenen Teilnehmer erfolgen. Da die Telefone sich sonst nur durch unterschiedlichen Klingelzeichen unterscheiden, muß der gerufene Teilnehmer die gewählte Zielrufnummer indirekt anhand unterschiedlicher Klingelsignale nach Klangfolge und Klanghöhe unterscheiden (beispielsweise für die eine analoge MSN ein kurzer und zwei lange Klingeltöne, und für die zweite analoge MSN zwei kurze und zwei lange Klingeltöne) .

Diese Art der Geräteauswahl ist zwar vom Ursprung (rufender Teilnehmer wählt unterschiedliche Rufnummern) her einfach, jedoch für den Kunden im Anrufziel nur schwer zu unterscheiden. Besonders Nachteilig ist es, daß der gerufene Teilnehmer sich u.U. eine ganze Reihe von verschiedenen Rufsignalen einprägen muß, insbesondere hinter einer TK-Anlage mit vielen Nebenstellen. Ein weiterer Nachteil ist, daß es nicht, ähnlich ISDN, möglich ist, Geräte mit unterschiedlichen Diensten aber gleicher analoger MSN oder Durchwahl, trotzdem gezielt auszuwählen.

Es ist daher Aufgabe der Erfindung, ausgehend von der Deutschen Patentanmeldung Nr. 19729126.0, ein Verfahren zur gezielten Auswahl von Endgeräten an analogen Teilnehmeranschlüssen zu schaffen, das sowohl die geplante analogen MSN umfaßt, als auch eine Möglichkeit zur Verfügung stellt, ohne spezielle analoge MSN zu arbeiten. Dabei soll der Ablauf beim rufenden und beim gerufenen Teilnehmer so einfach wie möglich sein.

Diese Aufgabe wird durch die kennzeichnenden Merkmale des Anspruchs 1 gelöst.

Bei dem erfindungsgemäßen Verfahren sendet der rufende Teilnehmer, der sowohl einen analogen als auch einen digitalen (ISDN) Teilnehmeranschluß besitzen kann, von seinem Endgerät eine Geräteauswahlinformation zusätzlich zur eigentlichen Rufnummer des Teilnehmeranschlusses des gerufenen Teilnehmers. Diese Geräteauswahlinformation wird zum gerufenen Teilnehmeranschluß weitergeleitet, an dem verschiede Endgeräte angeschlossen sind. Die Endgeräte werten die empfangene Geräteauswahlinformation aus und vergleichen diese mit einer in einem Speicher abgelegten eigenen Geräteauswahlinformation. Stimmt die Geräteauswahlinformation eines Endgerätes mit der Empfangenen überein, so wird dieses Endgerät aktiviert und führt seine spezifischen Funktionen aus (beispielsweise klingelt ein Telefon oder ein Faxgerät schaltet auf Empfang). Die anderen Endgeräte reagieren nicht !

Die Ausgestaltung nach Patentanspruch 2 beschreibt, wie die Geräteauswahlinformationen von einem dem rufenden Teilnehmer zugeordneten Ursprungsnetzknoten (beispielsweise eine Ortsvermittlungsstelle) an einen dem gerufenen Teilnehmer zugeordneten Zielnetzknoten (z.B. ebenfalls eine Ortsvermittlungsstelle) weiter gereicht wird und wie dieser die Geräteauswahlinformationen in ein FSK-moduliertes Signal umwandelt. Dieses FSK-modulierte Signal wird nach dem ersten Rufsignal zum gerufenen Teilnehmeranschluß übertragen, und somit kann die Geräteauswahlinformation von den daran angeschlossenen Endgeräte ausgewertet werden.

In einer weiteren Ausgestaltung gemäß Patentanspruch 3 enthalten die Daten dieses FSK-modulierte Signal einen speziellen Parameter, hier 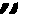 gezielte Anrufselektierung" genannt, sowie den eigentlichen Parameter zur Selektierung des Endgerätes, eine Geräteauswahlkennziffer. Diese Geräteauswahlkennziffer ist einem oder mehreren Endgeräten beim B-Teilnehmer zugeordnet.

In der Ausgestaltung nach Patentanspruch 4 werden unterschiedliche Zielrufnummern als Geräteauswahlinformationen verwendet. Dies können beispielsweise die oben beschriebenen analogen MSN sein. Die nötigen Informationen werden vom Ursprungsnetzknoten zum Zielnetzknoten durchgereicht.

Eine in Patentanspruch 5 wiedergegebene Variante verwendet keine unterschiedlichen Zielrufnummern sondern der rufende Teilnehmer sendet zusätzlich zur Wahlinformation (beispielsweise die Rufnummer des gerufenen Teilnehmeranschlusses) eine Zeichenfolge als Geräteauswahlinformation.

Die Patentansprüche 6 und 7 betreffen Codes für die Geräteauswahlinformationen.

Patentanspruch 8 bezieht sich auf Endgeräte an analogen Teilnehmeranschlüssen und Patentanspruch 9 auf Endgeräte an digitalen Anschlüssen.

Patentanspruch 10 bezieht sich auf ein speziell ausgebildetes Endgerät, das zur Ausführung des Verfahrens beim gerufenen Teilnehmer geeignet ist.

Die Patentansprüche 10 und 11 beziehen sich auf die Ausgestaltung von Telekommunikationseinrichtungen (beispielsweise Netzknoten) zur Ausführung des erfindungsgemäßen Verfahrens.

Anhand von Ausführungsbeispielen in Verbindung mit den Zeichnungen wird die erfindungsgemäße Lösung näher beschrieben. Es zeigen
- Figur 1: das Schema einer Verbindung über ein Telekommunikationsnetzwerk von rufenden Teilnehmern zu gerufenen Teilnehmern,
- Figur 2: Ablaufdiagramme des Verfahrens, und
- Figur 3: die Signalverläufe sowohl beim rufenden als auch beim gerufenen Anschluß

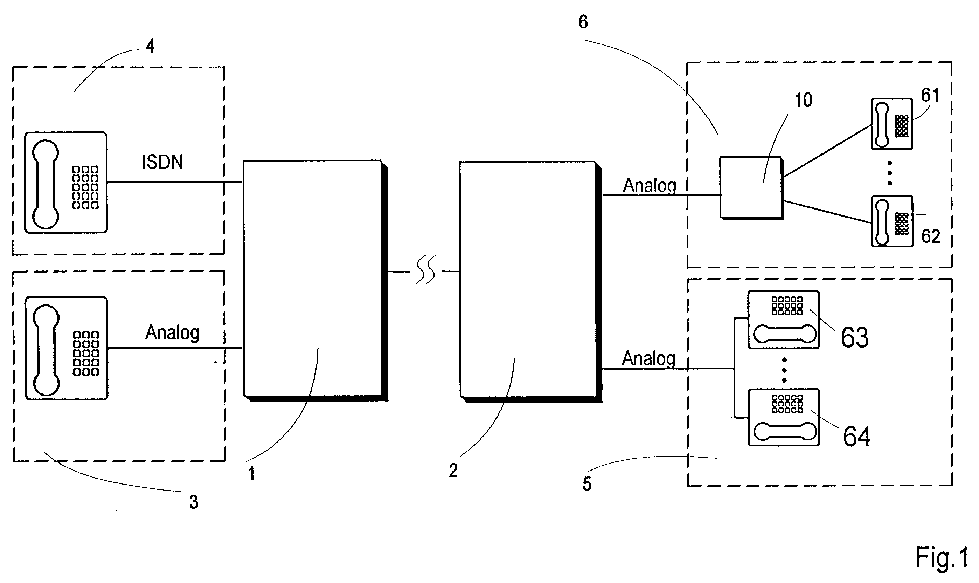

In Figur 1 sind die rufenden Teilnehmer mit 3 und 4 gekennzeichnet, dabei soll der Teilnehmer 4 über einen ISDN-Anschluß und der Teilnehmer 3 über einen analogen Anschluß mit dem Ursprungsnetzknoten 1 des Telekommunikationsnetzwerkes verbunden sein.
Die gerufenen Teilnehmer 5 und 6 besitzen dagegen analoge Verbindungen zum Zielnetzknoten 2. Dabei ist zwischen Ortsvermittlungsstelle 2 und den verschiedenen Nebenstellen 61, 62 beim gerufenen Teilnehmer 6 eine TK-Anlage 10 angeschlossen.

Beim gerufenen Teilnehmer 5 sind dagegen zwei Telefone 63, 64 direkt an den Zielnetzknoten 2 angeschlossen.

Die Endgeräte 61, 62, 63 oder 64 bei den gerufenen Teilnehmern 5 und 6 werden mit Hilfe von Geräteauswahlinformationen gezielt ausgewählt. Die Art, wie der rufende Teilnehmer 3 oder 4 die Geräteauswahlinformation übertragen muß, hängt von der Art des Anschlusses beim gerufenen Teilnehmer 5 oder 6 ab.
Die gerufenen Teilnehmern 5 und 6 können entweder eine Rufnummer oder mehrere unterschiedliche Mehrfachrufnummern (wie beispielsweise in Zukunft die analoge MSN) pro Teilnehmeranschluß besitzen.
Im Falle von analogen MSN werden die Endgeräte 61, 62, 63 oder 64 beim gerufenen Teilnehmer 5 und 6 mit Hilfe dieser Rufnummern ausgewählt. Im anderen Fall mit nur einer Rufnummer werden die Endgeräte 61, 62, 63 oder 64 mit Hilfe von Zeichencodes, die zusätzlich zur eigentlichen Rufnummer vom rufenden Teilnehmer 3 und 4 gesendet werden, ausgewählt.

Im Falle der Übertragung von Zeichencodes zu gerufenen Teilnehmern 5 oder 6 mit nur einer Rufnummer muß noch unterschieden werden, ob der rufende Teilnehmer 3 oder 4 einen analogen oder digitalen Anschluß besitzt. Bei dem rufenden Teilnehmer 3 mit analogen Anschluß werden die Zeichencodes mit Hilfe von MFV-codierten Zeichen übertragen. Der rufende Teilnehmer 4 mit digitalen Anschluß (hier am Beispiel ISDN) benutzt dazu die sogenannten Keypadstrings, über die eine Signalisierung über den D-Kanal z.B. mit Hilfe der Tastatur des Endgerätes möglich ist. Der Ablauf ist für den Benutzer ähnlich dem MFV-Verfahren.
Der Ursprungsnetzknoten 1 muß deshalb in der Lage sein, die in den MFV-codierte Zeichen und Keypadstrings enthaltene Geräteauswahlinformation zu erkennen und ebenso wie die Rufnummer an den Zielnetzknoten 2 weiterzuleiten.

Der Zielnetzknoten 2 gibt die erhaltene Geräteauswahlinformation an die Endgeräte 61, 62, 63 oder 64 der gerufenen Teilnehmer 5 oder 6 in Form von FSK-codierten Signalen aus. Beim gerufenen Teilnehmer 5 ohne TK-Anlage müssen die Endgeräte 63 und 64 selbst diese FSK-codierte Geräteauswahlinformation auswerten. Beim gerufenen Teilnehmer 6 mit TK-Anlage 10 kann dies auch die TK-Anlage 10 übernehmen.

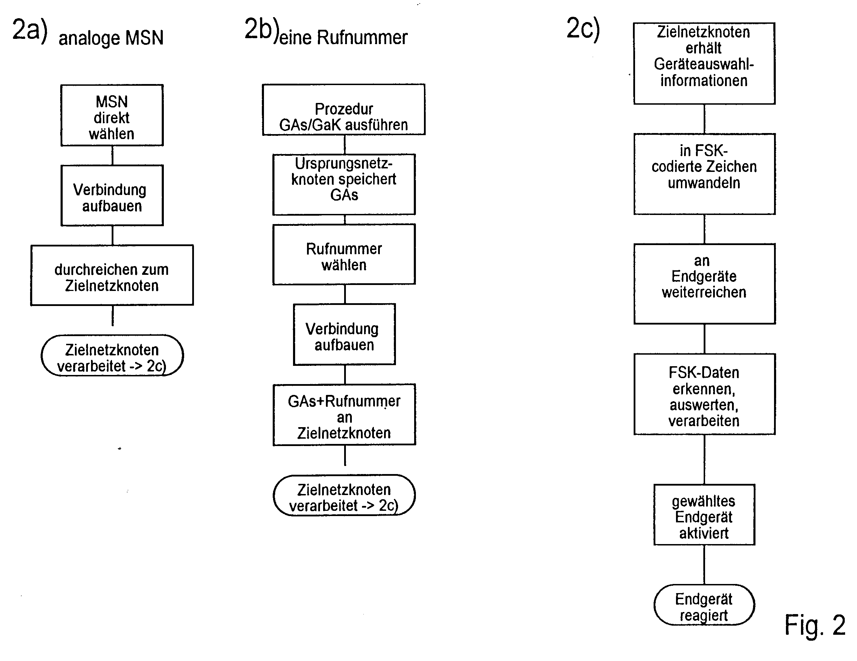

Anhand der Ablaufdiagramme in Figur 2 wird das erfindungsgemäße Verfahren beispielhaft genauer erläutert. Die Figuren 2a und 2b zeigen den Ablauf beim rufenden Teilnehmer 3 oder 4 einschließlich Ursprungsnetzknoten 1 und Figur 2b den Ablauf beim gerufenen Teilnehmer 5 oder 6 einschließlich Zielnetzknoten 2.

Es gibt bei diesem Verfahren, wie oben beschrieben, prinzipiell zwei Möglichkeiten für die Anrufart beim gerufenen Teilnehmer 5 oder 6:
• Figur 2a) Mehrfachrufnummer (analoge MSN):
   Der gerufene Teilnehmer 5 oder 6 besitzt zwei oder mehrere analoge MSN für seinen analogen Wählanschluß (Beispielsweise 01234/12340, 01234/12341 usw.). Die analogen MSN sind den verschiedenen Endgeräten 61 bis 64 des gerufenen Teilnehmers 5 oder 6 zugeordnet, die Geräteauswahlinformation ist also die analoge MSN selbst. Der rufende Teilnehmer 3 oder 4 wählt direkt die entsprechende analoge MSN an, die Verbindung wird aufgebaut Der Ursprungsnetzknoten 1 leitet diese analoge MSN zum Zielnetzknoten 2 weiter, der die Geräteauswahlinformation verarbeitet (wie unten Fig. 2c) beschrieben). .
• Figur 2b) Geräteauswahlkennziffer :
   Ein Teilnehmer hat keine analoge MSN, sondern nur eine einzige Rufnummer, unter der er erreichbar ist. Die Endgeräte 61, 62, 63 oder 64 beim gerufenen Teilnehmer 5 oder 6 sind in diesem Fall nur über Geräteauswahlkennziffern gezielt ansprechbar. Der rufende Teilnehmer 3 oder 4 muß hierbei eine Prozedur für das Dienstmerkmal 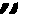 Gezielte Anrufselektierung" (GAs) ausführen, mittels dem die Geräteauswahlkennziffer (GaK) des entsprechenden Endgerätes 61, 62, 63 oder 64 beim gerufenen Teilnehmer 5 oder 6 vor der eigentlichen Zielrufnummer dem Ursprungsnetzknoten 1 mitgeteilt wird. Der rufende Teilnehmer 3 oder 4 führt zuerst die GAs/GaK-Prozedur und anschließend die Wahlprozedur (MFV oder Keypadstrings) aus. Die zu selektierenden Endgeräte 61, 62, 63 oder 64 haben beispielsweise die Geräteauswahlkennziffern GaK1 = 1, GaK2 = 2 bis GaK9 = 9. Es werden beispielhaft zwei Möglichkeiten gezeigt.
   a) Es wird ein zwei- oder mehrstelliger Dienstmerkmal-Code verwendet, bei dem die Dienstmerkmalkennziffer, bestehend aus einer Ziffer/Ziffernfolge (im Beispiel die Ziffer 8), mit der Geräteauswahlkennziffer direkt kombiniert wird :
      Allgemein geschrieben lautet der Dienstmerkmal-Code hier *DK#, wobei 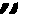 D" eine charakteristische Dienstmerkmalkennziffer/-kennziffernfolge für den Dienst 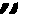 Gezielte Anrufselektierung" und 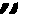 K" eine Geräteauswahlkennziffer/-kennziffernfolge für das zu selektierende Endgerät beim gerufenen Teilnehmer darstellt. Die 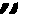 *" und die 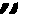 #" kennzeichnen den Beginn und das Ende des Dienstes 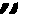 gezielte Anrufselektierung" gegenüber dem Ursprungsnetzknoten 1.
      Beispielsweise für
      Endgerät GaK1 = *81#
      Endgerät GaK2 = *82#
      ...
      Endgerät GaK9 = *89#
   b) Es wird ein ein- oder mehrstelliger Dienstmerkmal-Code für die Dienstmerkmalkennziffer/-kennziffernfolge (hier 80) verwendet, der mit der Geräteauswahlkennziffer/-kennziffernfolge, durch ein Trennungszeichen (z.B. 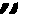 *")entkoppelt, ergänzt wird :
      Allgemein geschrieben lautet der Dienstmerkmal-Code hier *DD*K#, wobei 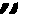 DD" eine charakteristische Zahl für das Dienstmerkmal 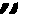 Gezielte Anrufselektierung" und 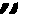 K" eine Geräteauswahlkennziffer/-kennziffernfolge für das zu selektierende Endgerät beim B-Teilnehmer darstellt. Die 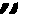 *" und die 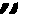 #" kennzeichnen wiederum den Beginn und das Ende des Dienstes 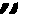 gezielte Anrufselektierung" gegenüber dem Ursprungsnetzknoten 1.
      Endgerät GaK1 = *80*1#
      Endgerät GaK2 = *80*2#
      ...
      Endgerät GaK9 = *80*9#
         oder
      Endgerät GaK15 = *80*15# (zweistellige Geräteauswahlkennziffer)

   Die notwendigen Dienstmerkmal-Codes können auch im Endgerät des rufenden Teilnehmers abgelegt sein, so daß der rufende Teilnehmer die Prozedur für die 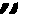 Gezielte Anrufselektierung" nicht manuell auszuführen braucht, z.B. in einem Kurzwahlspeicher, den die heutigen analogen und digitalen Telefone in der Regel besitzen.
   Zunächst übermittelt der rufende Teilnehmer 3 oder 4 bei dem erfindungsgemäßen Verfahren den Dienstmerkmal-Code und die Geräteauswahlkennziffer zum Ursprungsnetzknoten 1. Diese Daten werden dort zwischengespeichert. Danach wählt der rufende Teilnehmer 3 oder 4 die eigentliche Zielrufnummer des gerufenen Teilnehmers 5 oder 6, die Verbindung wird aufgebaut Innerhalb der Verfahrens zum Verbindungsaufbau sendet der Ursprungsnetzknoten 1 u.a. die Informationen bzgl. Geräteauswahlkennziffer an den durch die Zielrufnummer bestimmten Zielnetzknoten 2 weiter. Hierfür ist in den Übertragungsprotokollen zwischen den Ursprungs- 1 und Zielnetzknoten 2 ein entsprechendes Protokoll-Element erforderlich.
   In Figur 2c) wird im Zielnetzknoten 2 die angewählte analoge MSN (Zielrufnummer) oder die Geräteauswahlkennziffer in ein FSK-codiertes Signal (beispielsweise zusammen mit den Standard-CLIP-Informationen) umgewandelt. Der gerufene Teilnehmer 5 oder 6 wird mit der entsprechenden analogen MSN oder der einfachen Rufnummer gerufen, wobei nach dem 1. Rufsignal das FSK-codierte Signal übertragen wird. Erkennt ein Endgerät 61 bis 64 aus den übermittelten Daten die ihm zugeordnete Geräteauswahlinformation (analoge MSN oder Geräteauswahlkennziffer), so wird dieses aktiviert.
   Je nach Art und Einstellung des Endgerätes 61 bis 64 signalisiert dieses nun den Anruf (beispielsweise ein Telefon) oder es nimmt diese Verbindung automatisch entgegen (Telefax, Anrufbeantworter).

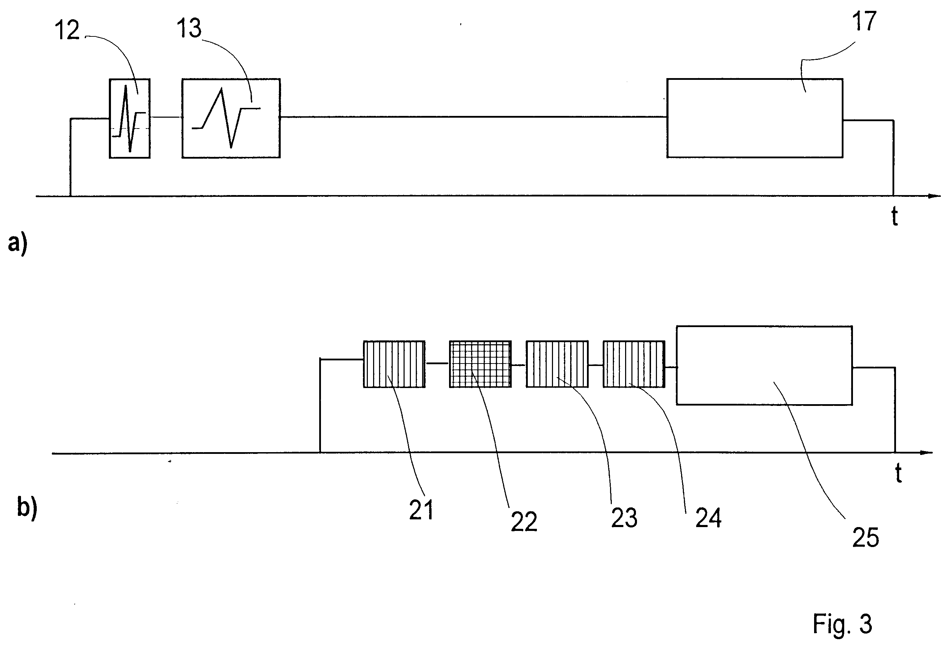

Figur 3 zeigt, wie der Signalverlauf mit Geräteauswahlkennziffer beim rufenden Teilnehmer (Figur 3a) und beim gerufenen Teilnehmer (Figur 3b), aufgetragen über einer Zeitachse t, schematisch aufgebaut ist.

Beim rufenden Teilnehmer 3 oder 4 (siehe Figur 3a) wird zuerst die Anschlußleitung (analoger Wählanschluß), bei einem ISDN-Anschluß sinngemäß ein B-Kanal belegt. Damit ist das Endgerät mit dem Ursprungsnetzknoten 1 verbunden. Nun wird die Prozedur zur 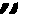 Gezielten Anrufselektierung" ausgeführt und als spezielle Signale 12 (MFV-codierte Zeichenfolge oder als Keypadstring) übertragen. Diese speziellen Signale 12 werden vom Ursprungsnetzknoten 1 entschlüsselt und zwischengespeichert. Danach wird eine Wahlinformation 13 (Rufnummer des gerufenen Teilnehmeranschlusses) übertragen; die Wahlinformation 13 kann auch zeitlich unmittelbar auf die Prozedur für das Dienstmerkmal 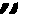 Gezielten Anrufselektierung" folgen. Der Ursprungsnetzknoten verbindet mit Hilfe der Wahlinformation 13 zum Zielnetzknoten 2, und reicht die Signale 12 und 13 weiter. Diese stehen damit zur Ausgabe an dem gerufenen Teilnehmeranschluß 5 oder 6 zur Verfügung. Ab einem gewissen Zeitpunkt erfolgt die Annahme der Verbindung 17 durch den gerufenen Teilnehmer 5 oder 6.

Beim gerufenen Teilnehmer 5 oder 6 sieht der Signalverlauf wie in Figur 3b gezeigt aus :

Der Zielnetzknoten 2 sendet zuerst ein 1. Rufsignal 21 an den gerufenen Teilnehmeranschluß 5 oder 6. Die Information für die Geräteauswahlkennung, die speziellen Signale 12, werden vom Zielnetzknoten 2 umgewandelt und zusammen mit den Standard-CLIP-Informationen als FSK-modulierte Signale 22 an den gerufenen Teilnehmeranschluß 5 oder 6 gesandt. Dort werden die FSK-modulierten Signale 22 durch die Endgeräte 61 bis 64 oder die TK-Anlage 10 ausgewertet und anhand der Geräteauswahlkennziffer wird ein Endgerät 61, 62, 63 oder 64 des gerufenen Teilnehmers 5 oder 6 aktiviert und signalisiert den Anruf oder nimmt diese Verbindung automatisch entgegen. Bis diese vorgenannte Auswertung abgeschlossen ist, können noch ein oder mehrere Rufsignale 23 bis 24 folgen, bis die Verbindung angenommen wird, oder der rufende Teilnehmer 3 oder 4 die Anschlußleitung freigibt. Nach Verbindungsannahme, entweder manuell durch den gerufenen Teilnehmer 5 oder 6 oder automatisch durch ein Endgerät 61 bis 64 werden die Signale 25 der Kommunikationsverbindung bis zur Auslösung der Verbindung durch einen der Teilnehmer ausgetauscht.

Anhand der obigen Beschreibungen ist zu erkennen, daß sowohl in den Endgeräten der Teilnehmer als auch in den Netzknoten Vorrichtungen zur Ausführung des erfindungsgemäßen Verfahrens vorgesehen sein müssen.

Um das erfindungsgemäße Verfahren durchzuführen, kann im Endgerät des rufenden Teilnehmers 3 oder 4 eine Abfrage der Geräteauswahlkennziffer implementiert sein, sowie ein Speicher zur Ablage des Dienstmerkmal-Codes bzw. dieses Dienstmerkmals. Die Endgeräte 61 bis 64 beim gerufenen Teilnehmer 5 oder 6 benötigen dagegen eine Vorrichtung, die nach dem 1. Rufsignal die FSK-modulierten Signale und die darin enthaltenen Dateninhalte erkennt, auswertet und verarbeitet, um entsprechend der eigenen vorselektierten Geräteauswahlkennziffer oder MSN reagieren zu können. Die Netzknoten 1 und 2 müssen in der Lage sein, die MFV-codierten Signale bzw. Keypadstrings weiterzureichen, als auch die übertragenen Protokollelemente in FSK-modulierte Signale, beispielsweise in ein CLIP-Datenformat, umzuwandeln und auszugeben.

### Bezugszeichenliste

- **t**: **Zeitachse**
- **1**: **Ursprungsnetzknoten**
- **2**: **Zielnetzknoten**
- **3**: **rufender Teilnehmer am analogen Anschluß**
- **4**: **rufender Teilnehmer am digitalen Anschluß (ISDN)**
- **5**: **gerufener Teilnehmer ohne TK-Anlage am analogen Anschluß**
- **6**: **gerufener Teilnehmer mit TK-Anlage am analogen Anschluß**
- **10**: **TK-Anlage**
- **12**: **spezielle Signale (MFV-Zeichen oder Keypadstrings)**
- **13**: **Wahlinformation**
- **17**: **Verbindung**
- **21**: **1. Rufsignal**
- **22**: **FSK-moduliertes Signal**
- **23,24**: **weitere Rufsignale**
- **25**: **Verbindung**
- **61,62**: **Endgeräte an einer TK-Anlage beim gerufenen Teilnehmer 6**
- **63,64**: **Endgeräte beim gerufenen Teilnehmer 5**

## Patentansprüche

1. Verfahren zur Auswahl eines Endgerätes an analogen Teilnehmeranschlüssen in Telefonnetzen, mit Netzknoten, die MFV-codierte Signale oder Keypadstrings auswerten und die enthaltene Information an andere Netzknoten weitergeben, und mit Netzknoten, die in der Lage sind, FSK-modulierte Signale an analoge Teilnehmeranschlüsse auszugeben, **dadurch gekennzeichnet**,
daß durch ein Endgerät eines rufenden Teilnehmers (3,4) an einem analogen oder digitalen Teilnehmeranschluß eine Geräteauswahlinformation ausgesendet wird,
daß die Geräteauswahlinformation zum Teilnehmeranschluß des gerufenen Teilnehmers (5,6) weitergeleitet wird,
daß Endgeräte (61,62, 63, 64) beim gerufenen Teilnehmer (5,6) diese Geräteauswahlinformation auswerten,
daß nur das Endgerät aktiviert wird, dessen in einem Speicher abgelegte eigenen Geräteauswahlinformation mit der empfangenen Geräteauswahlinformation übereinstimmt, und
daß die für dieses selektierte Endgerät spezifischen Funktionen ausführt werden.

2. Verfahren nach Patentanspruch 1, dadurch gekennzeichnet,
daß die benötigte Geräteauswahlinformation von einem dem rufenden Teilnehmer (3,4) zugeordneten Ursprungsnetzknoten (1) an einen durch die Wahlinformation bestimmten, dem gerufenen Teilnehmer (5,6) zugeordneten Zielnetzknoten (2) übermittelt wird,
daß der Zielnetzknoten (2) die Geräteauswahlinformation auswertet, in ein FSK-moduliertes Signal umwandelt und nach Aussendung eines ersten Rufsignals auf den gerufenen Teilnehmeranschluß (5,6) ausgibt.

3. Verfahren nach Patentanspruch 2, dadurch gekennzeichnet,
daß das FSK-modulierte Signal einen Parameter zur Signalisierung der gezielten Selektierung eines Endgerätes (61,62, 63, 64) am gerufenen Teilnehmeranschluß (5,6), die sogenannte 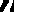 Gezielte Anrufselektierung" sowie eine Geräteauswahlkennziffer enthält, die einem oder mehreren Endgeräten (61,62, 63, 64) am gerufenen Teilnehmeranschluß (5,6) zugeordnet ist.

4. Verfahren nach Patentanspruch 3, dadurch gekennzeichnet,
daß vom Endgerät des rufenden Teilnehmers (3,4) als Geräteauswahlinformation unterschiedliche Zielrufnummern an den Ursprungsnetzknoten (1) gesendet werden und daß diese Geräteauswahlinformation an den Zielnetzknoten (2) durchgereicht wird.

5. Verfahren nach Patentanspruch 3, dadurch gekennzeichnet,
daß vom Endgerät des rufenden Teilnehmers (3,4) zuerst als Geräteauswahlinformation eine Zeichenfolge und anschließend die Wahlinformation an den Ursprungsnetzknoten (1) gesendet wird und daß diese Geräteauswahlinformation an den Zielnetzknoten (2) durchgereicht wird.

6. Verfahren nach Patentanspruch 5, dadurch gekennzeichnet,
daß die Geräteauswahlinformation in der Form *DK# an den Ursprungsnetzknoten (1) übertragen wird, wobei 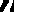 D" eine charakteristische Zahl für den Dienst 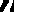 Gezielte Anrufselektierung" und 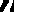 K" eine Kennziffer für das zu rufende Endgerät (61,62, 63, 64) darstellt.

7. Verfahren nach Patentanspruch 5, dadurch gekennzeichnet,
daß die Geräteauswahlinformation in der Form *DD*K# an den Ursprungsnetzknoten (1) übertragen wird, wobei 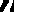 DD" eine charakteristische Zahl für den Dienst 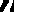 Gezielte Anrufselektierung" und 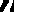 K" eine Kennziffer für das zu rufende Endgerät (61,62, 63, 64) darstellt.

8. Verfahren nach Patentanspruch 6 oder 7, dadurch gekennzeichnet,
daß die Geräteauswahlinformation in Form von MFV-codierten Zeichen vom Endgerät des rufenden Teilnehmers (3,4) an den Ursprungsnetzknoten (1) übermittelt wird.

9. Verfahren nach Patentanspruch 6 oder 7, dadurch gekennzeichnet,
daß die Geräteauswahlinformation in Form von Keypadstrings vom Endgerät des rufenden Teilnehmers (3,4) an den Ursprungsnetzknoten (1) übermittelt wird.

10. Telekommunikationsendgerät zur Verwendung bei der Durchführung eines Verfahrens nach einem der Patentansprüche 1 bis 9, dadurch gekennzeichnet,
daß es neben der zur Ausführung seiner spezifischen Endgerätefunktionen eine Einrichtung zum Empfang und zur Erkennung einer ankommenden Geräteauswahlinformation, einen Speicher zur Vorhaltung einer eigenen Geräteauswahlinformation und eine Einrichtung zum Vergleich der eigenen Geräteauswahlinformation mit der empfangenen Geräteauswahlinformation enthält, und daß das Telekommunikationsendgerät bei Übereinstimmung der empfangenen Geräteauswahlinformation mit der eigenen Geräteauswahlinformation aktiviert wird.

11. Einrichtung zur Verwendung bei der Durchführung eines Verfahrens nach einem der Patentansprüche 1 bis 9, dadurch gekennzeichnet,
daß es neben der zur Ausführung seiner spezifischen Funktionen als Netzknoten eine Vorrichtung zur Umwandlung von MFV-codierten Signalen oder Keypadstrings und den darin enthaltenen Daten in ein übertragbares Protokoll-Element, sowie eine Vorrichtung zum einfachen Weiterreichen dieses Protokollelements an andere Netzknoten enthält.

12. Einrichtung zur Verwendung bei der Durchführung eines Verfahrens nach einem der Patentansprüche 1 bis 9, dadurch gekennzeichnet,
daß es neben der zur Ausführung seiner spezifischen Funktionen als Netzknoten eine Vorrichtung zur Umwandlung von entsprechenden Protokollelementen in FSK-modulierte Signale enthält und diese in einem CLIP-Datenformat an den gerufenen Teilnehmer (5,6) überträgt.
